# FASCICULE DE BREVET EUROPEEN

(11) **EP 1 498 630 B1**
(45) Date de publication et mention de la délivrance du brevet: **10.01.2018**
(21) Numéro de dépôt: 04103315.0
(22) Date de dépôt: 13.07.2004
(51) Int. Cl.: F16D 23/14

(54) **Butée de commande pour embrayage de véhicule automobile à moyens d'anti-rotation perfectionnés**
Kupplungsbetätigungseinrichtung eines Kraftfahrzeuges mit verbesserter Verdrehsicherung
Automobile clutch control device with improved anti-rotation means

(30) Priorité: 16.07.2003 FR 0308696
(43) Date de publication de la demande: 19.01.2005
(73) Titulaire: Valeo Embrayages, 80009 Amiens Cedex 2 (FR)
(72) Inventeur: Gressier, Bruno, 80330 LONGUEAU (FR); Dast, Pascal, 80750 FIENVILLERS (FR)
(74) Mandataire: Cardon, Nicolas

(56) Documents cités:
- US-A- 3 203 520
- US-A- 4 186 828
- US-A1- 2002 139 633

## Description

La présente invention concerne une butée de commande pour embrayage de véhicule automobile à moyens d'anti-rotation perfectionnés. Voir US2002/139633, US-4186828, US-3203520 comme état de la technique plus proche. On connaît déjà dans l'état de la technique une butée de commande pour embrayage de véhicule automobile du type comportant :
- un manchon destiné à se déplacer en translation sur un tube guide, ce manchon comportant au moins une face de coopération avec un organe de commande de ce manchon, cette face de coopération étant sensiblement perpendiculaire à un axe parallèle à la direction de déplacement du manchon, dit axe du manchon,
- des moyens d'anti-rotation du manchon autour du tube guide comportant au moins une butée d'appui, agencée sur le manchon, destinée à coopérer angulairement avec une butée d'appui complémentaire portée par l'organe de commande du manchon.

Habituellement, le manchon porte un organe d'appui axial destiné à coopérer avec un diaphragme rotatif. Cet organe d'appui comporte généralement un roulement muni de deux bagues respectivement fixe en rotation et rotative, la bague rotative coopérant avec le diaphragme.

Les moyens d'anti-rotation du manchon empêchent la rotation du manchon sous l'effet du contact du roulement avec le diaphragme.

L'organe de commande du manchon est par exemple une fourchette. Dans ce cas, la butée d'appui angulaire coopère avec une butée d'appui complémentaire formée par un galet porté par la fourchette. En général, la butée d'appui angulaire est agencée, soit sur la face de coopération avec l'organe de commande, soit sur une partie du manchon adjacente angulairement à cette face de coopération, comme cela est décrit par exemple dans US-6 446 778. La fourchette porte classiquement deux galets coopérant avec deux parties correspondantes de la face de coopération.

L'invention a notamment pour but de faciliter l'usinage de la face de coopération ménagée sur le manchon.

A cet effet, l'invention a pour objet une butée de commande du type précité, **caractérisée en ce que** la butée d'appui est formée par un élément agencé sur le manchon de façon à être espacé axialement de la face de coopération, dit élément séparé.

Ainsi, la face de coopération peut être très facilement usinée par tournage du manchon, la butée d'appui, espacée axialement de la face de coopération, ne gênant pas la rotation du manchon devant l'outil d'usinage.

Suivant d'autres caractéristiques optionnelles de différents modes de réalisation de cette butée de commande :
- l'élément séparé est formé par un bossage ménagé sur le manchon ;
- les moyens d'anti-rotation du manchon comprennent :
   ▪ des moyens d'anti-rotation normaux comportant au moins une butée d'appui normal destinée à coopérer angulairement avec une butée d'appui complémentaire portée par l'organe de commande du manchon, et
   ▪ des moyens d'anti-rotation de substitution comportant au moins une butée d'appui de substitution disposée en retrait angulairement par rapport à la butée d'appui normal de manière à pouvoir se substituer à cette butée d'appui normal en cas de rupture ou d'usure au delà d'un seuil prédéterminé de la butée d'appui normal, la butée d'appui de substitution étant formée par l'élément séparé ;
- les moyens d'anti-rotation normaux comportent une butée d'appui normal dans le sens horaire, destinée à empêcher la rotation dans un sens de rotation horaire, et une butée d'appui normal dans le sens anti-horaire, destinée à empêcher la rotation dans le sens opposé au sens de rotation horaire ;
- les moyens d'anti-rotation de substitution comportent une butée d'appui de substitution dans le sens horaire, destinée à empêcher la rotation dans un sens de rotation horaire, et une butée d'appui de substitution dans le sens anti-horaire, destinée à empêcher la rotation dans le sens opposé au sens de rotation horaire ;
- l'organe de commande est une fourchette, la butée d'appui dans le sens horaire coopérant avec une butée d'appui complémentaire formée par un premier galet porté par la fourchette, et la butée d'appui dans le sens anti-horaire coopérant avec une butée d'appui complémentaire formée par un second galet porté par la fourchette ;
- la butée de commande comporte une unique butée d'appui dans le sens anti-horaire ;
- chaque butée d'appui est formée par un élément rapporté sur le manchon, de préférence, une goupille, ou par un bossage venu de matière sur le manchon ;
- l'élément rapporté est une goupille élastique fendue axialement ;
- la butée d'appui normal dans le sens horaire et la butée d'appui normal dans le sens anti-horaire sont formées par des éléments rapportés, de préférence des goupilles ;
- la butée d'appui de substitution dans le sens horaire et la butée d'appui de substitution dans le sens anti-horaire sont formées par des bossages ;
- l'unique butée d'appui dans le sens anti-horaire est formée par un bossage ;
- la butée de commande est une butée de type tiré, la face de coopération avec l'organe de commande formant face de traction ;
- chaque butée d'appui est formée par une goupille fixée sur la face de traction de façon à ce que l'axe de la goupille soit sensiblement perpendiculaire à la face de traction ;
- la butée de commande est une butée de type poussé, la face de coopération avec l'organe de commande formant face de poussée ;
- chaque butée d'appui est formée par une goupille fixée sur la face de poussée de façon à ce que l'axe de la goupille soit sensiblement perpendiculaire à la face de poussée.

L'invention sera mieux comprise à la lecture de la description qui va suivre, donnée uniquement à titre d'exemple et faite en se référant aux dessins annexés dans lesquels :
- la figure 1 est une vue en coupe axiale d'un dispositif d'embrayage équipé d'une butée de commande selon un premier mode de réalisation de l'invention, de type tiré ;
- la figure 2 est une vue en perspective de la butée de commande selon le premier mode de réalisation de l'invention ;
- la figure 3 est une vue selon la flèche 3 de la figure 2 de la butée de commande selon le premier mode de réalisation de l'invention, une butée d'appui normal coopérant avec une butée d'appui complémentaire portée par un organe de commande du manchon ;
- la figure 4 est une vue selon la flèche 3 de la figure 2 de la butée de commande selon le premier mode de réalisation de l'invention, une deuxième butée d'appui coopérant avec une butée d'appui complémentaire portée par un organe de commande du manchon lors d'une usure au delà d'un seuil prédéterminé de la première ;
- la figure 5 est une vue analogue à celle de la figure 3 montrant une butée de commande selon une deuxième mode de réalisation de l'invention, de type poussé.

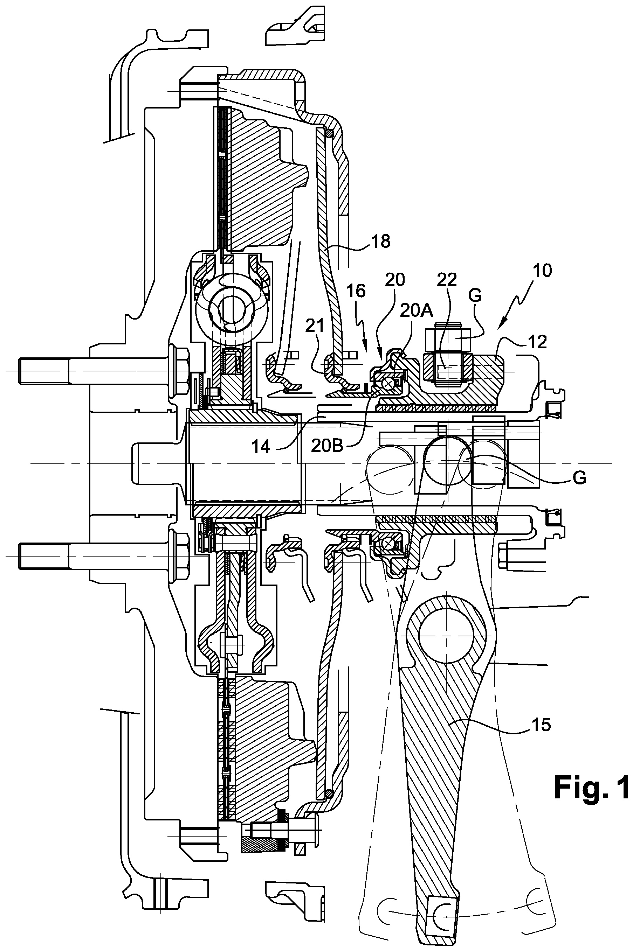

On a représenté sur la figure 1 un dispositif d'embrayage pour véhicule automobile équipé d'une butée de type tiré, selon un premier mode de réalisation de l'invention. Cette butée de commande, désignée par la référence générale 10, comporte un manchon 12 destiné à être déplacé en translation sur un tube guide 14 au moyen d'un organe de commande 15.

Dans l'exemple décrit, l'organe de commande 15 est formé par une fourchette 15, de type classique, munie de deux branches chevauchant le manchon 12. Chaque branche porte un galet G coopérant avec le manchon 12. On notera qu'un seul galet G est représenté sur les figure.

Le manchon 12 comporte une face T, éventuellement en deux parties sensiblement diamétralement opposées, de coopération avec les galets G de l'organe de commande 15, dite face de traction T. Le manchon 12 est ainsi déplacé en translation sur le tube guide 14 sous l'action des galets G de l'organe de commande 15 coopérant avec la face de traction T du manchon 12.

En variante, la face de coopération T peut s'étendre en une seule partie faisant le tour du manchon 12. Ainsi, un éventuel mouvement relatif angulaire des galets G autour du manchon 12 ne provoque pas de perte de contact de ces galets G avec la face T.

Le manchon 12 porte un organe d'appui 16 destiné à coopérer avec un diaphragme 18 de type classique. Cet organe d'appui 16 comporte un roulement 20 muni de deux bagues appelées respectivement bague fixe en rotation 20A et bague rotative 20B, la bague rotative 20B coopérant avec le diaphragme 18 par l'intermédiaire d'une coupelle de liaison 21.

Dans ce qui suit, on appellera sens de rotation horaire du diaphragme 18 le sens de rotation de ce diaphragme 18 lors du fonctionnement normal du moteur du véhicule automobile et sens de rotation anti-horaire du diaphragme 18 le sens de rotation de ce diaphragme 18 opposé au sens de rotation horaire.

Afin d'empêcher la rotation du manchon 12 sous l'effet du contact du roulement 20 avec le diaphragme rotatif 18, la butée de commande 10 comporte des moyens d'anti-rotation normaux 22 du manchon 12 autour du tube guide 14. Ces moyens d'anti-rotation normaux sont des moyens principaux d'anti-rotation, selon l'invention.

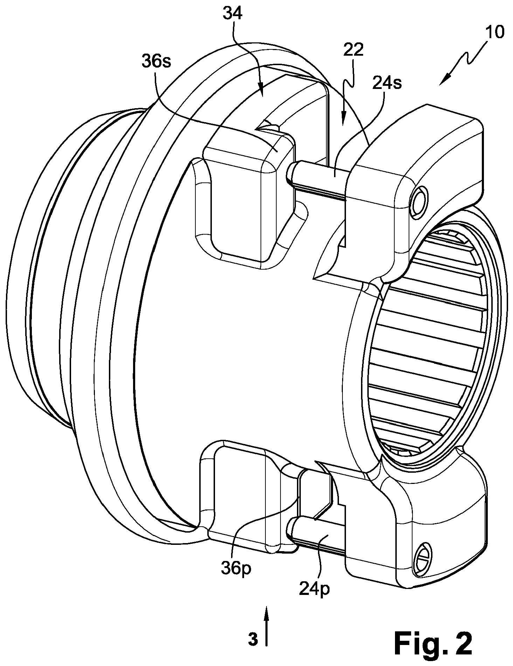

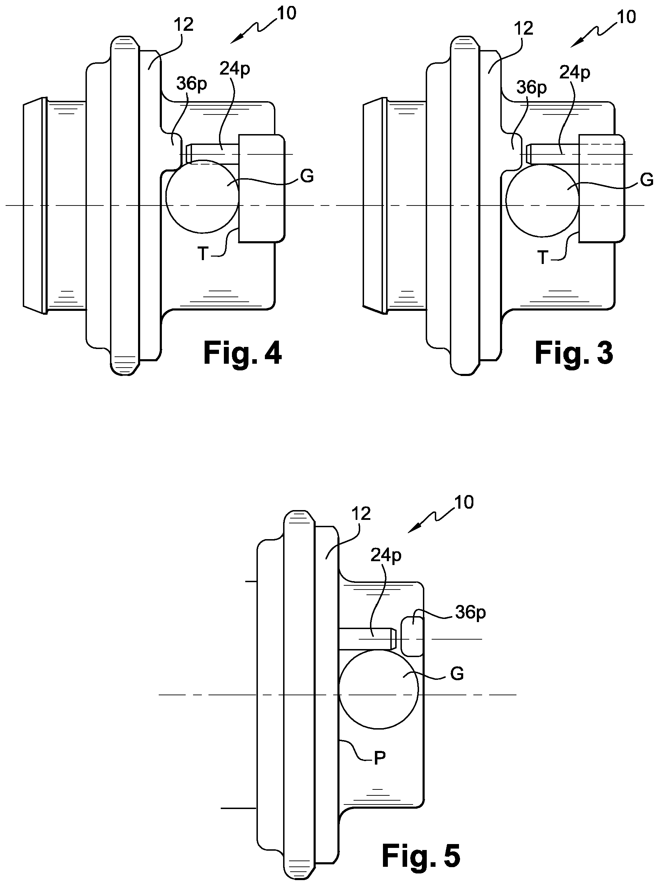

En se référant notamment aux figures 2 et 3, on voit que les moyens d'anti-rotation normaux 22 comportent deux butées d'appui 24p et 24s, chacune destinée à bloquer la rotation du manchon 12 dans un sens.

Ainsi, les moyens d'anti-rotation normaux 22 comportent une butée d'appui normal dans le sens horaire 24p, agencée sur le manchon 12 pour empêcher sa rotation dans le sens horaire, et une butée d'appui normal dans le sens anti-horaire 24s, agencée sur le manchon 12 pour empêcher sa rotation dans le sens anti-horaire. Cette butée d'appui normal dans le sens anti-horaire 24s permet d'assurer la fonction d'anti-rotation dans le sens inverse du sens normal de rotation du moteur. Cela est notamment utile lors de l'arrêt du moteur.

La butée d'appui dans le sens horaire 24p coopère angulairement avec une butée d'appui normal complémentaire formée par un premier galet G porté par la fourchette 15 et la butée d'appui dans le sens anti-horaire 24s coopère angulairement avec une butée d'appui de substitution complémentaire formée par le second galet, non représenté, porté par la fourchette.

La figure 3 montre le galet G coopérant avec la butée d'appui normal dans le sens horaire 24p et avec la face de traction T.

Dans l'exemple illustré, chaque butée d'appui normal 24p, 24s est formée par une goupille fixée sur la face de traction T de façon que l'axe de la goupille soit sensiblement parallèle à l'axe du manchon 12 et perpendiculaire à la face de traction T.

En variante, la goupille pourrait être remplacé par un autre élément rapporté de type classique, notamment une vis, un rivet, etc.

En général, les goupilles sont des goupilles métalliques, élastiques et fendues axialement, afin de faciliter leur insertion dans des trous ménagés sur le manchon 12.

Les butées d'appui normal 24p, 24s avantageusement formées par des goupilles rapportées sur le manchon 12, peuvent être facilement remplacées en cas d'usure.

Suivant une variante non représentée, les butées d'appui peuvent être formées chacune par un bossage venu de matière sur le manchon 12.

Cependant, il peut se produire -en cas d'usure des butées d'appui normal 24p, 24s formées par les goupilles au delà d'un seuil prédéterminé- un disfonctionnement des moyens d'anti-rotation normaux 22.

Pour éviter ce disfonctionnement, la butée de commande 10 comporte des moyens d'anti-rotation de substitution 34 permettant d'assurer de façon fiable la fonction d'anti-rotation malgré l'usure des moyens d'anti-rotation normaux 22.

Ces moyens d'anti-rotation de substitution 34 comportent une butée d'appui de substitution dans le sens horaire 36p agencée sur le manchon 12 en retrait angulairement par rapport à la butée d'appui normal dans le sens horaire 24p, de manière à pouvoir se substituer à cette butée d'appui normal dans le sens horaire 24p en cas de rupture ou d'usure au delà d'un seuil prédéterminé de la butée d'appui normal dans le sens horaire 24p.

La butée d'appui de substitution dans le sens horaire 36p est destinée à empêcher la rotation du manchon 12 dans le sens horaire lorsque la butée d'appui normal dans le sens horaire 24p est trop usée pour pouvoir remplir correctement cette fonction.

Les moyens d'anti-rotation de substitution 34 comportent de plus une butée d'appui de substitution dans le sens anti-horaire 36s agencée sur le manchon 12 en retrait angulairement par rapport à la butée d'appui normal dans le sens anti-horaire 24s, de manière à pouvoir se substituer à cette butée d'appui normal dans le sens anti-horaire 24s en cas de rupture ou d'usure au delà d'un seuil prédéterminé de la butée d'appui normal dans le sens anti-horaire 24s.

La butée d'appui de substitution dans le sens anti-horaire 36s est destinée à empêcher la rotation dans le sens anti-horaire lorsque la butée d'appui normal dans le sens anti-horaire 24s est trop usée pour pouvoir remplir correctement cette fonction.

Ainsi, en cas de disfonctionnement des moyens d'anti-rotation normaux 22, la butée de commande 10 sera maintenue en état de fonctionnement grâce aux moyens d'anti-rotation de substitution 34 jusqu'à ce que les moyens d'anti-rotation normaux 22, usés, soient remplacés par des moyens d'anti-rotation normaux neufs.

On notera que les butées d'appui de substitution 36p, 36s dans les sens horaire et anti-horaire sont formées par des éléments respectifs, dits éléments séparés car agencés sur le manchon 12 de façon à être espacés axialement de la face de coopération T.

Ainsi, avant montage des butées d'appui normal 24p, 24s (formées par des goupilles) sur la face de coopération T, cette face T peut être facilement usinée par tournage du manchon 12, les butées d'appui de substitution 36p, 36s, espacées axialement de la face de coopération T, ne gênant pas la rotation du manchon 12 devant l'outil d'usinage.

La figure 4 montre le galet G coopérant avec la deuxième butée d'appui dans le sens horaire 36p et avec la face de traction T, lorsque l'usure de la butée d'appui normal dans le sens horaire 24p a dépassé le seuil prédéterminé pour permettre aux moyens d'anti-rotation de substitution 34 de se substituer aux moyens d'anti-rotation normaux 22.

Les secondes butées d'appui 36p, 36s ne coopèrent qu'occasionnellement avec les galets G correspondants, car seulement en cas d'usure trop importante des premières butées d'appui.24p, 24s. Les secondes butées d'appui 36p, 36s ne nécessitent donc pas de pouvoir être remplacées.

Comme dans le mode de réalisation décrit, les butées d'appui 36p, 36s sont préférablement formées par des bossages venus de matière sur le manchon 12. Ces bossages, constituant les éléments séparés, sont faciles et peu coûteux à réaliser. Toutefois, suivant une variante non représentée, les butées d'appui 36p, 36s peuvent être formées par des goupilles rapportées sur le manchon 12.

On notera que pour des raisons économiques, il peut être envisagé que la butée de commande 10 ne comporte qu'une seule butée d'appui dans le sens anti-horaire. En effet, une butée d'appui dans le sens anti-horaire ne remplit son rôle de moyen d'anti-rotation qu'occasionnellement, dans les cas particuliers où le diaphragme 18 est amené à tourner dans le de rotation contraire, par exemple lors de l'arrêt du moteur.

Ainsi, cette butée d'appui dans le sens anti-horaire est peu sujette à l'usure. Il n'est donc pas indispensable de pourvoir la butée de commande 10 d'une butée d'appui de substitution dans le sens anti-horaire destinée à se substituer à la butée d'appui normal dans le sens anti-horaire.

En cas de butée d'appui dans le sens anti-horaire unique, celle-ci sera avantageusement formée par un bossage (économique) plutôt qu'une goupille.

Selon un deuxième mode de réalisation de l'invention, représenté sur la figure 5, la butée de commande peut être une butée de type poussé 10.

Sur cette figure 5, les éléments analogues à ceux des figures précédentes sont désignés par des références identiques.

Le manchon 12 comporte dans ce cas une face de coopération avec les galets G de l'organe de commande 15, éventuellement en deux parties sensiblement diamétralement opposées, dite face de poussée P. Chaque butée d'appui 24p, 24s, formée par une goupille, est fixée sur la face de poussée P de façon que l'axe de la goupille soit sensiblement parallèle à l'axe du manchon 12 et perpendiculaire à la face de poussée P.

Le fonctionnement de la butée de commande 10 pour embrayage de véhicule automobile à moyens d'anti-rotation perfectionnés est le même mutatis mutandis pour une butée de type tiré ou une butée de type poussé.

## Revendications

1. Butée de commande (10) pour embrayage de véhicule automobile du type comportant :
- un manchon (12) destiné à se déplacer en translation sur un tube guide (14), ce manchon (12) comportant au moins une face de coopération (T ; P) avec un organe de commande (15) de ce manchon (12), cette face de coopération (T ; P) étant sensiblement perpendiculaire à un axe parallèle à la direction de déplacement du manchon (12), dit axe du manchon (12),
- des moyens d'anti-rotation (22, 34) du manchon (12) autour du tube guide (14) comportant au moins une butée d'appui (36p, 36s), agencée sur le manchon (12), destinée à coopérer angulairement avec une butée d'appui complémentaire portée par l'organe de commande (15) du manchon (12),
**caractérisée en ce que** la butée d'appui (36p, 36s) est formée par un élément agencé sur le manchon (12) de façon à être espacé axialement de la face de coopération (T ; P), dit élément séparé, et **en ce que** les moyens d'anti-rotation (22, 34) du manchon (12) comprennent :
- des moyens d'anti-rotation normaux (22) comportant au moins une butée d'appui normal (24p, 24s) destinée à coopérer angulairement avec une butée d'appui complémentaire portée par l'organe de commande (15) du manchon (12), et
- des moyens d'anti-rotation de substitution (34) comportant au moins une butée d'appui de substitution (36p, 36s) disposée en retrait angulairement par rapport à la butée d'appui normal (24p, 24s) de manière à pouvoir se substituer à cette butée d'appui normal (24p, 24s) en cas de rupture ou d'usure au delà d'un seuil prédéterminé de la butée d'appui normal (24p, 24s), la butée d'appui de substitution (36p, 36s) étant formée par l'élément séparé.

2. Butée de commande (10) selon la revendication 1, **caractérisée en ce que** l'élément séparé (36p, 36s) est formé par un bossage ménagé sur le manchon (12).

3. Butée de commande (10) selon la revendication 1 ou 2, **caractérisée en ce que** les moyens d'anti-rotation normaux (22) comportent une butée d'appui normal dans le sens horaire (24p), destinée à empêcher la rotation dans un sens de rotation horaire, et une butée d'appui normal dans le sens anti-horaire (24s), destinée à empêcher la rotation dans le sens opposé au sens de rotation horaire.

4. Butée de commande (10) selon l'une des revendications 1 à 3, **caractérisée en ce que** les moyens d'anti-rotation de substitution (34) comportent une butée d'appui de substitution dans le sens horaire (36p), destinée à empêcher la rotation dans un sens de rotation horaire, et une butée d'appui de substitution dans le sens anti-horaire (36s), destinée à empêcher la rotation dans le sens opposé au sens de rotation horaire.

5. Butée de commande (10) selon la revendications 3 ou 4, **caractérisée en ce que** l'organe de commande est une fourchette (15), la butée d'appui dans le sens horaire (24p, 36p) coopérant avec une butée d'appui complémentaire formée par un premier galet (G) porté par la fourchette (15), et la butée d'appui dans le sens anti-horaire (24s, 36s) coopérant avec une butée d'appui complémentaire formée par un second galet porté par la fourchette (15).

6. Butée de commande (10) selon l'une quelconque des revendications 3 à 5, **caractérisée en ce qu'**elle comporte une unique butée d'appui dans le sens anti-horaire.

7. Butée de commande (10) selon l'une quelconque des revendications 1 à 6, **caractérisée en ce que** chaque butée d'appui (24p, 24s, 36s, 36p) est formée par un élément rapporté sur le manchon, de préférence une goupille, ou par un bossage venu de matière sur le manchon.

8. Butée de commande (10) selon la revendication 7, **caractérisée en ce que** l'élément rapporté est une goupille élastique fendue axialement.

9. Butée de commande (10) selon la revendication 3 prise ensemble avec la revendication 7 ou 8, **caractérisée en ce que** la butée d'appui normal dans le sens horaire (24p) et la butée d'appui normal dans le sens anti-horaire (24s) sont formées par des éléments rapportés, de préférence des goupilles.

10. Butée de commande (10) selon les revendications 4 et 7 prises ensemble, **caractérisée en ce que** la butée d'appui de substitution dans le sens horaire (36p) et la butée d'appui de substitution dans le sens anti-horaire (36s) sont formées par des bossages.

11. Butée de commande (10) selon les revendications 6 et 10 prises ensemble, **caractérisée en ce que** l'unique butée d'appui dans le sens anti-horaire est formée par un bossage.

12. Butée de commande (10) selon l'une quelconque des revendications 1 à 11 **caractérisée en ce qu'**elle est une butée de type tiré, la face de coopération (T) avec l'organe de commande (15) formant face de traction.

13. Butée de commande (10) selon les revendications 5 et 12 prises ensemble, **caractérisée en ce que** chaque butée d'appui (24p, 24s) est formée par une goupille fixée sur la face de traction (T) de façon à ce que l'axe de la goupille soit sensiblement perpendiculaire à la face de traction (T).

14. Butée de commande (10) selon l'une quelconque des revendications 1 à 11 **caractérisée en ce qu'**elle est une butée de type poussé, la face de coopération (P) avec l'organe de commande (15) formant face de poussée.

15. Butée de commande (10) selon les revendications 5 et 14 prises ensemble, **caractérisée en ce que** chaque butée d'appui (24p, 24s) est formée par une goupille fixée sur la face de poussée (P) de façon à ce que l'axe de la goupille soit sensiblement perpendiculaire à la face de poussée (P).

## Patentansprüche

1. Kupplungsbetätigungseinrichtung (10) eines Kraftfahrzeuges, die Folgendes umfasst:
- eine Hülse (12), die dafür bestimmt ist, eine Translationsbewegung auf einem Führungsrohr (14) vorzunehmen, wobei diese Hülse (12) mindestens eine Fläche zum Zusammenwirken (T; P) mit einem Betätigungsglied (15) dieser Hülse (12) aufweist, wobei diese Fläche zum Zusammenwirken (T; P) im Wesentlichen senkrecht zu einer Achse parallel zur Bewegungsrichtung der Hülse (12), der sogenannten Achse der Hülse (12), verläuft,
- eine Verdrehsicherung (22, 34) für die Hülse (12) um das Führungsrohr (14) herum, die mindestens einen Anschlag (36p, 36s) aufweist, der an der Hülse (12) angeordnet ist und dafür bestimmt ist, in Winkelrichtung mit einem ergänzenden Anschlag zusammenzuarbeiten, der von dem Betätigungsglied (15) der Hülse (12) getragen wird,
**dadurch gekennzeichnet, dass** der Anschlag (36p, 36s) durch ein als getrenntes Element bezeichnetes Element gebildet ist, das auf der Hülse (12) derart angeordnet ist, dass es axial einen Abstand zu der Fläche zum Zusammenwirken (T; P) aufweist, und dadurch, dass die Verdrehsicherung (22, 34) der Hülse (12) Folgendes umfasst:
- eine normale Verdrehsicherung (22), die mindestens einen normalen Anschlag (24p, 24s) aufweist, der dafür bestimmt ist, in Winkelrichtung mit einem ergänzenden Anschlag zusammenzuarbeiten, der von dem Betätigungsglied (15) der Hülse (12) getragen wird, und
- eine Ersatzverdrehsicherung (34), die mindestens einen Ersatzanschlag (36p, 36s) aufweist, der bezogen auf den normalen Anschlag (24p, 24s) derart in Winkelrichtung zurückgesetzt angeordnet ist, dass er diesen normalen Anschlag (24p, 24s) im Falle eines Bruchs oder beim Verschleiß über eine vorgegebene Schwelle des normalen Anschlags (24p, 24s) hinaus ersetzen kann, wobei der Ersatzanschlag (36p, 36s) von dem getrennten Element gebildet wird.

2. Betätigungseinrichtung (10) nach Anspruch 1, **dadurch gekennzeichnet, dass** das getrennte Element (36p, 36s) von einer Erhebung gebildet wird, die an der Hülse (12) vorgesehen ist.

3. Betätigungseinrichtung (10) nach Anspruch 1 oder 2, **dadurch gekennzeichnet, dass** die normale Verdrehsicherung (22) einen normalen Anschlag in der Uhrzeigerrichtung (24p) aufweist, der dafür bestimmt ist, dass er die Drehung in einer Uhrzeigerrichtung verhindert, und einen normalen Anschlag in der Richtung entgegen der Uhrzeigerrichtung (24s), der dafür bestimmt ist, dass er die Drehung in der Richtung entgegengesetzt zur Uhrzeigerrichtung verhindert.

4. Betätigungseinrichtung (10) nach einem der Ansprüche 1 bis 3, **dadurch gekennzeichnet, dass** die Ersatzverdrehsicherung (34) einen Ersatzanschlag in der Uhrzeigerrichtung (36p) aufweist, der dafür bestimmt ist, dass er die Drehung in einer Uhrzeigerrichtung verhindert, und einen Ersatzanschlag in der Richtung entgegen der Uhrzeigerrichtung (36s), der dafür bestimmt ist, dass er die Drehung in der Richtung entgegengesetzt zur Uhrzeigerrichtung verhindert.

5. Betätigungseinrichtung (10) nach Anspruch 3 oder 4, **dadurch gekennzeichnet, dass** das Betätigungsglied eine Gabel (15) ist, wobei der Anschlag in der Uhrzeigerrichtung (24p, 36p) mit einem ergänzenden Anschlag zusammenarbeitet, der von einer ersten Rolle (G) gebildet wird, die von der Gabel (15) getragen wird, und wobei der Anschlag in der Richtung entgegen der Uhrzeigerrichtung (24s, 36s) mit einem ergänzenden Anschlag zusammenarbeitet, der von einer zweiten Rolle gebildet wird, die von der Gabel (15) getragen wird.

6. Betätigungseinrichtung (10) nach einem der Ansprüche 3 bis 5, **dadurch gekennzeichnet, dass** sie einen einzigen Anschlag in der Richtung entgegen der Uhrzeigerrichtung aufweist.

7. Betätigungseinrichtung (10) nach einem der Ansprüche 1 bis 6, **dadurch gekennzeichnet, dass** jeder Anschlag (24p, 24s, 36s, 36p) von einem Element, das an die Hülse angefügt ist, vorzugsweise einem Stift, oder von einer einstückig an der Hülse ausgebildeten Erhebung gebildet wird.

8. Betätigungseinrichtung (10) nach Anspruch 7, **dadurch gekennzeichnet, dass** das angefügte Element ein axial geschlitzter elastischer Stift ist.

9. Betätigungseinrichtung (10) nach Anspruch 3, gemeinsam mit Anspruch 7 oder 8 betrachtet, **dadurch gekennzeichnet, dass** der normale Anschlag in der Uhrzeigerrichtung (24p) und der normale Anschlag in der Richtung entgegen der Uhrzeigerrichtung (24s) von angefügten Elementen, vorzugsweise Stiften, gebildet werden.

10. Betätigungseinrichtung (10) nach Anspruch 4 und 7 gemeinsam betrachtet, **dadurch gekennzeichnet, dass** der Ersatzanschlag in der Uhrzeigerrichtung (36p) und der Ersatzanschlag in der Richtung entgegen der Uhrzeigerrichtung (36s) von Erhebungen gebildet werden.

11. Betätigungseinrichtung (10) nach Anspruch 6 und 10 gemeinsam betrachtet, **dadurch gekennzeichnet, dass** der einzige Anschlag in der Richtung entgegen der Uhrzeigerrichtung von einer Erhebung gebildet wird.

12. Betätigungseinrichtung (10) nach einem der Ansprüche 1 bis 11, **dadurch gekennzeichnet, dass** sie eine auf Zug arbeitende Einrichtung ist, wobei die Fläche zum Zusammenwirken (T) mit dem Betätigungsglied (15) eine Zugfläche bildet.

13. Betätigungseinrichtung (10) nach Anspruch 5 und 12 gemeinsam betrachtet, **dadurch gekennzeichnet, dass** jeder Anschlag (24p, 24s) von einem Stift gebildet wird, der auf der Zugfläche (T) derart befestigt ist, dass die Achse des Stifts im Wesentlichen senkrecht zur Zugfläche (T) verläuft.

14. Betätigungseinrichtung (10) nach einem der Ansprüche 1 bis 11, **dadurch gekennzeichnet, dass** sie eine auf Druck arbeitende Einrichtung ist, wobei die Fläche zum Zusammenwirken (P) mit dem Betätigungsglied (15) eine Druckfläche bildet.

15. Betätigungseinrichtung (10) nach Anspruch 5 und 14 gemeinsam betrachtet, **dadurch gekennzeichnet, dass** jeder Anschlag (24p, 24s) von einem Stift gebildet wird, der auf der Druckfläche (P) derart befestigt ist, dass die Achse des Stifts im Wesentlichen senkrecht zur Druckfläche (P) verläuft.

## Claims

1. Control thrust bearing (10) for a motor vehicle clutch of the type comprising:
- a sleeve (12) intended to move in translation on a guide tube (14), this sleeve (12) comprising at least one face (T; P) for co-operation with a control member (15) for this sleeve (12), this co-operation face (T; P) being substantially perpendicular to an axis parallel to the direction of movement of the sleeve (12), termed axis of the sleeve (12),
- means (22, 34) for anti-rotation of the sleeve (12) about the guide tube (14), comprising at least one bearing stop (36p, 36s) arranged on the sleeve (12) and intended to co-operate angularly with a complementary bearing stop borne by the control member (15) for the sleeve (12),
**characterized in that** the bearing stop (36p, 36s) is formed by an element arranged on the sleeve (12) so as to be spaced axially from the co-operation face (T; P), termed separate element, and **in that** the means (22, 34) for anti-rotation of the sleeve (12) comprise:
- normal anti-rotation means (22) comprising at least one normal bearing stop (24p, 24s) intended to co-operate angularly with a complementary bearing stop borne by the control member (15) for the sleeve (12), and
- substitution anti-rotation means (34) comprising at least one substitution bearing stop (36p, 36s) arranged set back angularly with respect to the normal bearing stop (24p, 24s) so as to be able to be substituted for this normal bearing stop (24p, 24s) in the event of breakage or wear beyond a predetermined threshold of the normal bearing stop (24p, 24s), the substitution bearing stop (36p, 36s) being formed by the separate element.

2. Control thrust bearing (10) according to Claim 1, **characterized in that** the separate element (36p, 36s) is formed by a boss formed on the sleeve (12).

3. Control thrust bearing (10) according to Claim 1 or 2, **characterized in that** the normal anti-rotation means (22) comprise a normal bearing stop (24p) in the clockwise direction, intended to prevent the rotation in a clockwise direction of rotation, and a normal bearing stop (24s) in the anticlockwise direction, intended to prevent the rotation in the direction opposite to the clockwise direction of rotation.

4. Control thrust bearing (10) according to one of Claims 1 to 3, **characterized in that** the substitution anti-rotation means (34) comprise a substitution bearing stop (36p) in the clockwise direction, intended to prevent the rotation in a clockwise direction of rotation, and a substitution bearing stop (36s) in the anticlockwise direction, intended to prevent the rotation in the direction opposite to the clockwise direction of rotation.

5. Control thrust bearing (10) according to Claim 3 or 4, **characterized in that** the control member is a fork (15), the bearing stop (24p, 36p) in the clockwise direction co-operating with a complementary bearing stop formed by a first roller (G) borne by the fork (15), and the bearing stop (24s, 36s) in the anticlockwise direction co-operating with a complementary bearing stop formed by a second roller borne by the fork (15).

6. Control thrust bearing (10) according to any one of Claims 3 to 5, **characterized in that** it comprises a single bearing stop in the anticlockwise direction.

7. Control thrust bearing (10) according to any one of Claims 1 to 6, **characterized in that** each bearing stop (24p, 24s, 36s, 36p) is formed by an element added onto the sleeve, preferably a pin, or by a boss formed in one piece on the sleeve.

8. Control thrust bearing (10) according to Claim 7, **characterized in that** the add-on element is an axially split elastic pin.

9. Control thrust bearing (10) according to Claim 3 taken together with Claim 7 or 8, **characterized in that** the normal bearing stop (24p) in the clockwise direction and the normal bearing stop (24s) in the anticlockwise direction are formed by add-on elements, preferably pins.

10. Control thrust bearing (10) according to Claims 4 and 7, taken together, **characterized in that** the substitution bearing stop (36p) in the clockwise direction and the substitution bearing stop (36s) in the anticlockwise direction are formed by bosses.

11. Control thrust bearing (10) according to Claims 6 and 10, taken together, **characterized in that** the single bearing stop in the anticlockwise direction is formed by a boss.

12. Control thrust bearing (10) according to any one of Claims 1 to 11, **characterized in that** it is a pull-type thrust bearing, the face (T) for co-operation with the control member (15) forming a traction face.

13. Control thrust bearing (10) according to Claims 5 and 12, taken together, **characterized in that** each bearing stop (24p, 24s) is formed by a pin fixed to the traction face (T) in such a way that the axis of the pin is substantially perpendicular to the traction face (T) .

14. Control thrust bearing (10) according to any one of Claims 1 to 11, **characterized in that** it is a push-type thrust bearing, the face (P) for co-operation with the control member (15) forming a push face.

15. Control thrust member (10) according to Claims 5 and 14, taken together, **characterized in that** each bearing stop (24p, 24s) is formed by a pin fixed to the push face (P) in such a way that the axis of the pin is substantially perpendicular to the push face (P).
